# EUROPEAN PATENT SPECIFICATION

(11) **EP 1 461 540 B1**
(45) Date of publication and mention of the grant of the patent: **15.06.2011**
(21) Application number: 03700015.5
(22) Date of filing: 01.01.2003
(51) Int. Cl.: F16D 3/78

(54) **FLEXIBLE COUPLING**
NACHGIEBIGE KUPPLUNG
PIECES D'ACCOUPLEMENT FLEXIBLES

(30) Priority: 03.01.2002 US 33794; 02.04.2002 GB 0207565
(43) Date of publication of application: 29.09.2004
(73) Proprietor: REXNORD CORPORATION, Milwaukee, WI 53214 (US)
(72) Inventor: BYERLY, Duane, V., Waukesha, WI 53189 (US); OLSON, Stewart, A., Lincoln, NE 68507 (US)
(74) Representative: Winckels, Johannes Hubertus F.
(86) International application number: PCT/IB2003/000007
(87) International publication number: WO 2003/056199

(56) References cited:
- EP-A- 1 072 808
- DE-A- 19 742 359
- FR-A- 1 146 604
- US-A- 1 359 157
- PATENT ABSTRACTS OF JAPAN vol. 1999, no. 13, 30 November 1999 (1999-11-30) -& JP 11 226994 A (MARUYASU IND CO LTD), 24 August 1999 (1999-08-24)

## Description

This invention relates to an improved flexible coupling for connecting a drive shaft to a driven shaft and to a method of manufacturing the same.

Flexible couplings are know which comprise an annular body, typically of a plastics material, incorporating circumferentially spaced, parallel bores through which bolts can be passed to bolt the coupling to an annular flange on the drive shaft and to an annular flange on the driven shaft. The body has an even number of fastening means providing bores and alternate bolts connect the body to the one and then the other flange. Adjacent bores are linked so that as each bolt connected to the flange on the drive shaft moves it drags with it the bolt upstream of it connected to the flange on the driven shaft. The body is substantially inelastic but has a degree of flexibility, and this permits minor misalignment between the shafts without destruction of the coupling. The fastening means providing the bores may be bushes connected by strands passed around and between them, but conveniently may be constituted by, or may comprise, apertures at opposite ends of metal links. An even number of links is "stacked" with the apertures at one of their respective ends in alignment and the apertures at the other of their respective ends located alternately at the adjacent fastening means on opposite sides of the first-mentioned fastening means. Washers are located on opposite sides of each "stack" of links to provide end orifices for the bores.

Flexible couplings according to the preamble of claim 1 are for instance known from document DE-A-197 42 359.

The problem arises that when a bolt is subsequently pushed through a bore of a previously manufactured coupling it is liable to push the downstream washer out of the body of the coupling, the bond between the washer and the plastics material of the body being insufficient to prevent this.

An object of the present invention is to overcome this problem by keying the washers to the body so that only a force sufficient to shear the material of the body would be great enough to allow a washer to be expelled. In practice forces of this magnitude will not be encountered.

In accordance with one aspect of the present invention there is provided a flexible coupling for connecting a drive shaft to a driven shaft, the coupling comprising an annular body of a mouldable material in which fastening means are incorporated whereby the coupling may be fastened to the shafts, the fastening means comprising an even number of parallel bores circumferentially distributed about said annular body, each bore opening to opposite sides of the annular body, a plurality of link means passing around each bore and extending at least one to the adjacent bore in one direction from said first-mentioned bore and at least one to the adjacent bore in the other direction from said first-mentioned bore, and washer means on opposite sides of said link means defining end orifices of each bore, each washer means having a peripheral, formation such that when the body is moulded to incorporate the fastening means and link means each washer means will be locked by the moulded material against displacement out of said annular body.

In accordance with another, aspect of the present invention there is provided an assembly comprising a flexible coupling according to the immediately preceding paragraph, a drive shaft having an annular flange formed with a number of circumferentially spaced holes at least half the number of the fastening means, a driven shaft having an annular flange formed with a number of circumferentially spaced holes at least half the number of the fastening means and a plurality of bolts passing through respective said fastening means, half of the bolts fastening the coupling to the flange of the drive shaft and the other half of the bolts fastening the flange on the driven shaft to the coupling.

Said peripheral formation is preferably a peripheral groove in each said washer means.

The mouldable material is preferably a thermosetting plastics material, such as a urethane polymer.

The washer means are preferably of metal and the link means may be of a composite material such as thermosetting fibreglass epoxy, each having openings at its opposite ends which will constitute part of two adjacent said bores, an even number of link means in a stacked relationship between a pair of washer means constituting each said bore with alternate link means extending to the bores on opposite sides of said first-mentioned bore.

The annular body may have parallel faces from which the washer means project, the mouldable material being shaped to surround each washer means where it is proud of a body face.

In accordance with another aspect of the present invention there is provided a method of manufacturing the flexible coupling of the present invention, the method comprising locating in a mould an annular array of circumferentially spaced fastening means comprising said link means which extend between adjacent fastening means and said washer means on opposite sides of the link means, introducing into the mould a thermosetting plastics material in a liquid state so that it incorporates the fastening means and the link means and penetrates said peripheral formations of the washer means and curing the plastics material.

The mould may be spun while a urethane polymer is introduced into it in a liquid state.

A preferred embodiment of the present invention will now be described by way of non-limitative example with reference to the accompanying drawings, in which:
- Figure 1: is a front elevation of a flexible coupling in accordance with the present invention;
- Figure 2: is an enlarged sectional elevation of one of the fastening means of the coupling, taken on the line II-II of Figure 1, and
- Figure 3: is a side elevation of the coupling;
- Figure 4: is a partly exploded side view of the coupling interposed between flanges of a drive and of a driven shaft, and
- Figure 5: is a front elevation of one of the flanges taken on the line V-V of Figure 4.

### DETAILED DESCRIPTION OF THE PREFERRED EMBODIMENT

The flexible coupling 10 illustrated comprises an annular body 11 of a thermosetting plastics material, such as a urethane polymer, in which are embedded in an equally circumferentially spaced array six similar fastening means 12A - 12F. The fastening means 12A - 12F provide parallel bores through the body 11 through which bolts 16A-16F may be passed to secure the coupling to an annular flange 17 at one end of a drive shaft 18 and to an annular flange 19 at one end of a driven shaft 20, alternate bolts securing the coupling first to one and then the other flange 17,19 when the coupling is interposed between and substantially coaxially aligned with the flanges.

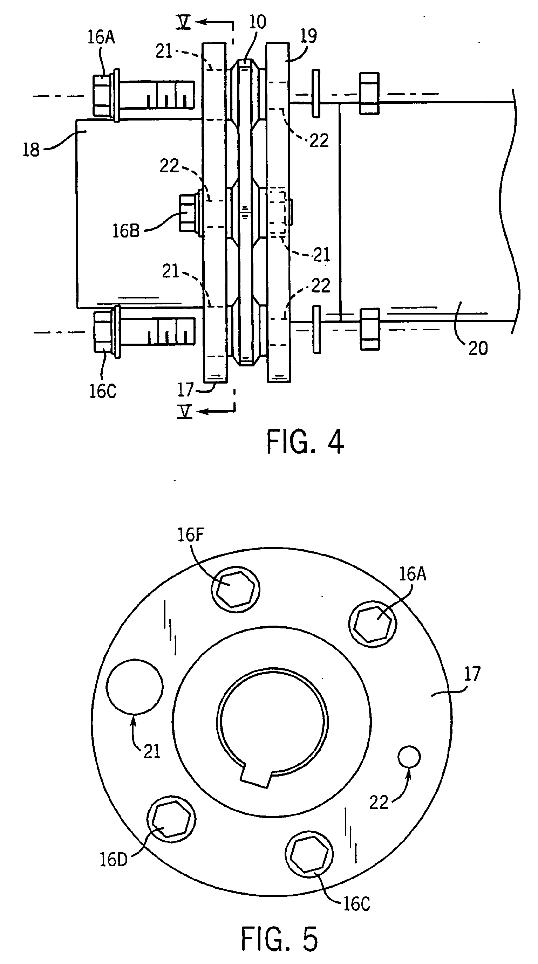

Three of the bolts 16A-16C are visible in Figure 4. At the location of the bolts 16A and 16C the flange 17 is formed with relatively large-diameter holes giving clearance for the shanks of the bolts 16A and 16C but at the location of the bolt 16B it is formed with a relatively narrower-diameter hole substantially fitting the shank of the bolt 16B. An example of a larger hole is indicated at 21 in Figure 5 and a smaller one at 22. The larger and smaller holes alternate around the flange 17. On the confronting flange 19 the arrangement of holes such as 21,22 is the opposite. Thus in the assembled condition of the coupling it is substantially incapable of angular movement relative to the flange 17 about half of the bolts 16A-16F but angular movement of the other half of the bolts is possible within the limits of the larger holes such as 21 in the flange 17. In the case of the flange 19 the arrangement is opposite. The bolts which are immovable relative to the flange 17 can move angularly within the larger holes such as 21 of the flange 19 and the bolts which can move angularly relative to the flange 17 are immovable relative to the flange 19.

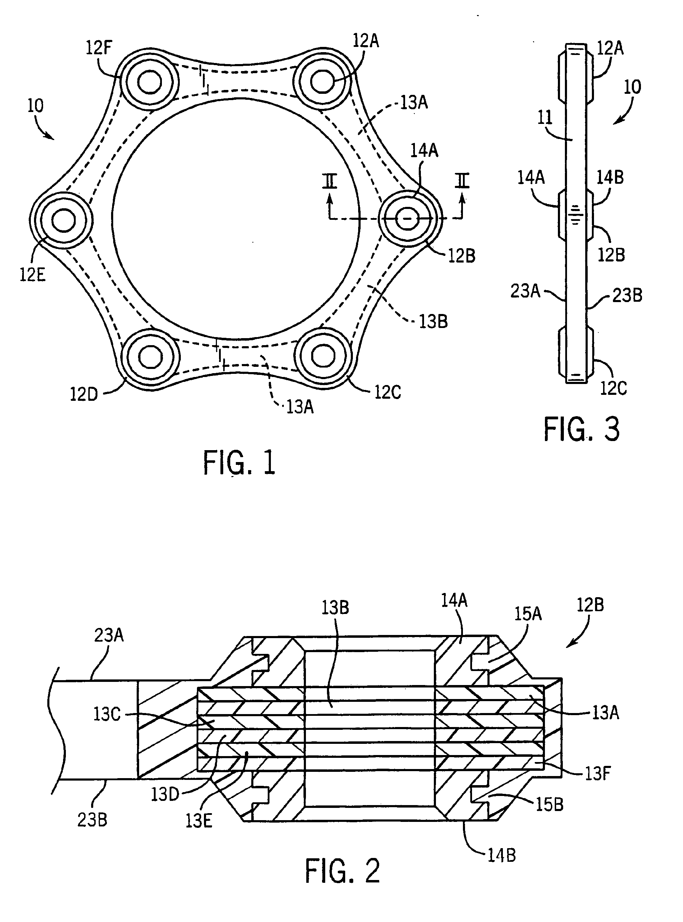

Links 13A - 13F have apertures at their opposite ends. These links are of a composite material such as thermosetting fibreglass epoxy. They are arranged in a stack with the apertures at one of their respective ends in alignment to form the central part of the bore of a fastening means as illustrated in Figure 2 in the case of the fastening means 12B. A first link 13A of the fastening means 12B extends to the fastening means 12A adjacent to the fastening means 12B counter-clockwise as viewed in Figure 1, a second link 13B extends to the fastening means 12C adjacent to the fastening means 12B in the clockwise direction as viewed in Figure 1 and so on in alternate sequence. The opposite ends of the links 13A - 13F are interleaved with other similar links extending between the fastening means 12A and 12F and between the fastening means 12C and 12D to form the central parts of the bores of the fastening means 12A and 12C.

By this arrangement, in whichever sense the coupling 10 is rotated by the drive shaft each fastening means bolted to the drive shaft flange will drag after it the adjacent fastening means bolted to the driven shaft on its upstream side. Meanwhile a minor misalignment between the drive and driven shafts can be tolerated by the flexibility of the coupling.

Each fastening means 12A - 12F is completed by a pair of washers such as indicated at 14A,14B in Figure 2, the washers being located at opposite ends of the associated stack of links such as 13A - 13E and protruding from the parallel faces of the body 11.

In accordance with the present invention each washer such as 14A and 14B is formed with a peripheral groove such as 15A,15B (Figure 2). In the manufacture of the flexible coupling the links and the washers are positioned in a dry mould which is then spun as a thermosetting plastics material such as a urethane polymer is introduced. The plastics material enters the grooves such as 15A and 15B and, after the plastics material has hardened, locks the washers such as 14A, 14B into the body 11 of plastics material. This prevents the downstream washer such as 14A or 14B from being expelled from the body 11 when a bolt is subsequently passed through the bore of a fastening means 12A - 12F to fasten the coupling either to the flange of the drive shaft or to the flange of the driven shaft.

It will be understood that each washer such as 14A,14B may have a formation instead of or additional to the groove such as 15A, 15B which will serve to lock it within the moulded body 11.

In the preferred embodiment illustrated the bores of the fastening means 12A - 12F are formed exclusively by apertures of links such as 13A - 13F and a pair of washers such as 14A, 14B, all coaxially aligned. However a bush may extend through the whole or a part of the bore, being surrounded by the links and washers.

Links such as 13A - 13F with apertures at their opposite ends are merely exemplary of the ways in which adjacent fastening means 12A - 12F may be interconnected. Instead of or in addition to the links strands, for example resin-impregnated strands, may be wound between bushes constituting all or part of the bore of each fastening means.

## Claims

1. A flexible coupling (10) for connecting a drive shaft (18) to a driven shaft (20), the coupling (10) comprising an annular body (11) of a mouldable material in which fastening means (12A-12F) are incorporated whereby the coupling (10) may be fastened to the shafts (18, 20), the fastening means (12A-12F) comprising an even number of parallel bores circumferentially distributed about said annular body (11), each bore opening to opposite sides of annular body (11), a plurality of link means (13A-13F) passing around each bore and extending at least one to the adjacent bore in one direction from said first-mentioned bore and at least one to the adjacent bore in the other direction from said first-mentioned bore, **characterised in that** washer means (14A, 14B) on opposite sides of said link means (13A-13F) define end orifices of each bore, each washer means (14A, 14B) having a peripheral formation (15A, 15B) such that when the body is moulded to incorporate the fastening means (12A-12F) and link means (13A-13F) each washer means (14A, 14B) will be locked by the moulded material against displacement out of said annular body (11).

2. An assembly comprising a flexible coupling (10) as claimed in claim 1, a drive shaft (18) having an annular flange (17) formed with a number of circumferentially spaced holes at least half the number of the fastening means (12A-12F), a driven shaft (20) having an annular flange (19) formed with a number of circumferentially spaced holes at least half the number of the fastening means (12A-12F) and a plurality of bolts (16A-16F) passing through respective said fastening means (12A-12F), half of the bolts (16A-16F) fastening the coupling (10) to the flange (17) of the drive shaft (18) and the other half of the bolts (16A-16F) fastening the flange (19) on the driven shaft (20) to the coupling (10).

3. A flexible (10) as claimed in claim 1 or an assembly as claimed in claim 2, wherein said peripheral formation is a peripheral groover (15A, 15B) in each said washer means (14A, 14B).

4. A flexible coupling (10) as claimed in claim 1 or an assembly as claimed in claim 2 or claim 3, wherein the mouldable material is a thermosetting plastics material.

5. A flexible coupling (10) or an assembly as claimed in claim 4, wherein the plastics material is a urethane polymer.

6. A flexible coupling (10) as claimed in claim 1 or an assembly as claimed in any one of claims 2-5, wherein the washer means (14A, 14B) are of metal.

7. A flexible coupling (10) as claimed in claim 1 or an assembly as claimed in any one of claims 2-6, wherein the link means (13A-13F) are of composite material, each having openings at its opposite ends which will constitute part of two adjacent said bores, an even number of link means (13A-13F) in a stacked relationship between a pair of washer means (14A-14B) constituting each said bore with alternate link means (13A-13F) extending to the bores on opposite sides of said first-mentioned bore.

8. A flexible coupling (10) as claimed in claim 1 or an assembly as claimed in any one of claims 2-7, wherein the annular body (11) has parallel faces from which the washer means (14A, 14B) project, the mouldable material being shaped to surround each washer means (14A,14B) where it is proud of a body face.

9. A method of manufacturing the flexible coupling (10) claimed in claim 1, or the flexible coupling (10) of the assembly of any one of claims 2-8, **characterised in that** the method comprises locating in a mould an annular array of circumferentially spaced fastening means (12A-12F) comprising said link means (13A-13F) which extend between adjacent fastening means (12A-12F) and washer means (14A-14B) on opposite sides of the links means (13A-13F) introducing into the mould a thermosetting plastics material in a liquid state so that it incorporates the fastening means (12A-12F) and the link means (13A-13F) and penetrates said peripheral formations (15A, 15B) of the washer means (14A, 14B) and curing the plastics material.

10. A method as claimed in claim 9, wherein the mould is spun while a urethane polymer is introduced into it in a liquid state.

## Patentansprüche

1. Flexible Kupplung (10) zur Verbindung einer Antriebswelle (18) mit einer angetriebenen Welle (20), wobei die Kupplung (10) umfasst einen ringförmigen Körper (11) eines formbaren Materials, in welchem Befestigungseinrichtungen (12A-12F) eingebaut sind, wodurch die Kupplung (10) an den Wellen (18, 20) befestigt werden kann, und wobei die Befestigungsmittel (12A-12F) umfassen eine gerade Anzahl von parallelen Bohrungen, welche umfänglich um den ringförmigen Körper (11) verteilt sind, wobei jede Bohrung sich zu gegenüberliegenden Seiten des ringförmigen Körpers (11) öffnet, mehrere Verbindungseinrichtungen (13A-13F) um jede Bohrung herum verlaufen und sich zumindest eine zu der benachbarten Bohrung in einer Richtung von der zuerst genannten Bohrung und zumindest eine zu der benachbarten Bohrung in der anderen Richtung von der zuerst genannten Bohrung erstreckt, **dadurch gekennzeichnet, dass** Beilageinrichtungen (14A, 14B) auf gegenüberliegenden Seiten der Verbindungseinrichtungen (13A-13F) Endöffnungen jeder Bohrung begrenzen, wobei jede Beilageinrichtung (14A, 14B) eine umfängliche Formation (15A, 15B) aufweist, derart, dass wenn der Körper dahingehend geformt ist, die Befestigungseinrichtungen (12A-12F) und Verbindungseinrichtungen (13A-13F) zu enthalten, jede Beilageinrichtung (14A, 14B) durch das formbare Material gegenüber Versetzung aus dem ringförmigen Körper (11) gesperrt ist.

2. Aufbau, umfassend eine flexible Kupplung (10) nach Anspruch 1, eine Antriebswelle (18) mit einem ringförmigen Flansch (17), der mit einer Anzahl von umfänglich beabstandeten Öffnungen an zumindest der halben Anzahl der Befestigungsmittel (12A, 12F) ausgebildet ist, eine Antriebswelle (20) mit einem ringförmigen Flansch (19), der mit einer Anzahl von umfänglich beabstandeten Öffnungen an zumindest der halben Anzahl der Befestigungseinrichtungen (12A, 12F) ausgebildet ist, und mehreren Bolzen (16A-16F), welche durch jeweilige der Befestigungseinrichtungen (12A-12F) hindurch verlaufen, wobei die Hälfte der Bolzen (16A-16F) die Kupplung (10) an dem Flansch (17) der Antriebswelle (18) befestigen, und die andere Hälfte der Bolzen (16A-16F) den Flansch (19) der angetriebenen Welle (20) an der Kupplung (10) befestigen.

3. Flexible Kupplung (10) nach Anspruch 1 oder Aufbau nach Anspruch 2, wobei die umfängliche Formation eine umfängliche Nut (15A, 15B) in jeder der Beilageinrichtungen (14A, 14B) ist.

4. Flexible Kupplung (10) nach Anspruch 1 oder Aufbau nach Anspruch 2 oder 3, wobei das formbare Material ein wärmehärtendes Kunststoffmaterial ist.

5. Flexible Kupplung (10) oder Aufbau nach Anspruch 4, wobei das Kunststoffmaterial Urethanpolymer ist.

6. Flexible Kupplung (10) nach Anspruch 1 oder Aufbau nach irgendeinem der Ansprüche 2-5, wobei die Beilageinrichtungen (14A, 14B) aus Metall sind.

7. Flexible Kupplung (10) nach Anspruch 1 oder Aufbau nach irgendeinem der Ansprüche 2-6, wobei die Verbindungseinrichtungen (13A-13F) aus Verbundmaterial sind, wobei jede Öffnungen an ihren gegenüberliegenden Enden aufweist, welche einen Teil von zwei benachbarten der Bohrungen bilden, wobei eine gerade Anzahl von Verbindungseinrichtungen (13A-13F) in gestapelter Beziehung zwischen einem Paar von Beilageinrichtungen (14A, 14B) jede der Bohrungen bilden, wobei abwechselnde Verbindungseinrichtungen (13A-13F) sich zu den Bohrungen auf gegenüberliegenden Seiten von der zuerst genannten Bohrung erstrecken.

8. Flexible Kupplung (10) nach Anspruch 1 oder Aufbau nach irgendeinem der Ansprüche 2-7, wobei der ringförmige Körper (11) parallele Flächen aufweist, von welchem die Beilageinrichtungen (14A, 14B) hervorstehen, wobei das formbare Material dahingehend geformt ist, jede Beilageinrichtung (14A, 14B) zu umschließen, wo sie eine Körperfläche zeigt.

9. Verfahren zur Herstellung der flexiblen Kupplung (10) nach Anspruch 1, oder einer flexiblen Kupplung (10) des Aufbaus von irgendeinem der Ansprüche 2-8, **dadurch gekennzeichnet, dass** das Verfahren umfasst
Anordnen eines ringförmigen Bereichs von umfänglich beabstandeten Befestigungsmitteln (12A-12F) in einer Form, umfassend die Verbindungseinrichtungen (13A-13F), welche sich zwischen Befestigungseinrichtungen (12A-12F) erstrecken, und Beilageinrichtungen (14A, 14B) auf gegenüberliegenden Seiten der Verbindungseinrichtungen (13A-13F), Einführen eines wärmehärtenden Kunststoffmaterials in einem flüssigen Zustand in die Form, so dass sie die Befestigungseinrichtungen (12A-12F) und die Verbindungseinrichtungen (13A-13F) enthält und die umfänglichen Formationen (15A, 15B) der Beilageinrichtungen (14A, 14B) durchdringt, und Aushärten des Kunststoffmaterials.

10. Verfahren nach Anspruch 9, wobei die Form gedreht wird, während ein Urethanpolymer in einem flüssigen Zustand eingeleitet wird.

## Revendications

1. Accouplement flexible (10) pour relier un arbre d'entraînement (18) à un arbre entraîné (20), l'accouplement (10) comprenant un corps annulaire (11) en matériau moulable dans lequel sont intégrés des moyens de fixation (12A-12F), moyennant quoi l'accouplement (10) peut être fixé aux arbres (18, 20), les moyens de fixation (12A-12F) comprenant un nombre pair de perçages parallèles répartis sur la circonférence du corps annulaire (11), chaque perçage débouchant sur les côtés opposés du corps annulaire (11), plusieurs moyens de liaison (13A-13F) passant autour de chaque perçage, l'un au moins s'étendant vers le perçage voisin dans une direction, à partir du perçage mentionné en premier, et l'un au moins vers le perçage voisin dans l'autre direction à partir dudit perçage mentionné en premier,
**caractérisé en ce que** des moyens formant rondelle (14A, 14B) prévus sur les côtés opposés des moyens de liaison (13A-13F) définissent des orifices d'extrémité de chaque perçage, chaque moyen formant rondelle (14A, 14B) ayant une formation périphérique (15A, 15B) telle que quand le corps sera moulé pour incorporer les moyens de fixation (12A-12F) et les moyens de liaison (13A-13F), chaque moyen formant rondelle (14A, 14B) sera bloqué par le matériau moulé à l'encontre d'un déplacement hors du corps annulaire (11).

2. Ensemble comprenant un accouplement flexible (10) tel que revendiqué dans la revendication 1, un arbre d'entraînement (18) présentant une bride annulaire (17) pourvue d'un nombre de trous espacés sur la circonférence qui est égal au moins à la moitié du nombre de moyens de fixation (12A-12F), un arbre entraîné (20) présentant une bride annulaire (19) pourvue d'un nombre de trous espacés sur la circonférence qui est égal au moins à la moitié du nombre de moyens de fixation (12A-12F), et plusieurs boulons (16A-16F) traversant les moyens de fixation (12A-12F) respectifs, la moitié des boulons (16A-16F) fixant l'accouplement (10) à la bride (17) de l'arbre d'entraînement (18) tandis que l'autre moitié des boulons (16A-16F) fixent la bride (19) de l'arbre entraîné (20) à l'accouplement (10).

3. Accouplement flexible (10) tel que revendiqué dans la revendication 1 ou ensemble tel que revendiqué dans la revendication 2, dans lequel ladite formation périphérique est une rainure périphérique (15A, 15B) dans chaque moyen formant rondelle (14A, 14B).

4. Accouplement flexible (10) tel que revendiqué dans la revendication 1 ou ensemble tel que revendiqué dans la revendication 2 ou la revendication 3, dans lequel le matériau moulable est une matière plastique thermodurcissable.

5. Accouplement flexible (10) ou ensemble tel que revendiqué dans la revendication 4, dans lequel la matière plastique est un polymère uréthanne.

6. Accouplement flexible (10) tel que revendiqué dans la revendication 1 ou ensemble tel que revendiqué dans l'une quelconque des revendications 2 à 5, dans lequel les moyens formant rondelle (14A, 14B) sont en métal.

7. Accouplement flexible (10) tel que revendiqué dans la revendication 1 ou ensemble tel que revendiqué dans l'une quelconque des revendications 2 à 6, dans lequel les moyens de liaison (13A-13F) sont en matériau composite, chacun présentant sur ses extrémités opposées des ouvertures qui font partie de deux perçages voisins, et un nombre pair de moyens de liaison (13A-13F) empilés entre deux moyens formant rondelles (14A-14B) constituant chaque perçage, avec des moyens de liaison alternés (13A-13F) qui s'étendent vers les perçages sur les côtés opposés du perçage mentionné en premier.

8. Accouplement flexible (10) tel que revendiqué dans la revendication 1 ou ensemble tel que revendiqué dans l'une quelconque des revendications 2 à 7, dans lequel le corps annulaire (11) a des faces parallèles d'où dépassent les moyens formant rondelle (14A, 14B), le matériau moulable étant formé de manière à entourer chaque moyen formant rondelle (14A, 14B) là où celui-ci dépasse d'une face du corps.

9. Procédé pour fabriquer l'accouplement flexible (10) revendiqué dans la revendication 1 ou l'accouplement flexible (10) de l'ensemble de l'une quelconque des revendications 2 à 8, **caractérisé en ce qu'**il comprend les étapes qui consistent à placer dans un moule un ensemble annulaire de moyens de fixation (12A-12F), espacés sur la circonférence, comprenant lesdits moyens de fixation (13A-13F) qui s'étendent entre des moyens de fixation (12A-12F) voisins, et des moyens formant rondelle (14A-14B) sur les côtés opposés des moyens de liaison (13A-13F), à introduire dans le moule une matière plastique thermodurcissable dans un état liquide de telle sorte qu'elle enrobe les moyens de fixation (12A-12F) et les moyens de liaison (13A-13F) et pénètre dans les formations périphériques (15A, 15B) des moyens formant rondelle (14A, 14B), et à faire durcir la matière plastique.

10. Procédé tel que revendiqué dans la revendication 9, selon lequel le moule est mis en rotation rapide pendant qu'un polymère uréthanne y est introduit dans un état liquide.
